# EUROPÄISCHE PATENTSCHRIFT

(11) **EP 0 657 611 B1**
(45) Veröffentlichungstag und Bekanntmachung des Hinweises auf die Patenterteilung: **20.08.1997**
(21) Anmeldenummer: 94118729.6
(22) Anmeldetag: 29.11.1994
(51) Int. Cl.: E06B 3/02, E06B 5/16, E05D 5/02

(54) **Brandschutzverglasung**
Fire resistant glazing
Vitrage pare-feu

(30) Priorität: 30.11.1993 DE 4340690
(43) Veröffentlichungstag der Anmeldung: 14.06.1995
(73) Patentinhaber: PROMAT GmbH, 40880 Ratingen (DE); FACHVERBAND GLASDACH-UND METALLBAU e.V., D-50670 Köln (DE)
(72) Erfinder: Hardebusch, Martin, D-59872 Meschede (DE); Kujas, Detlef, D-51107 Köln (DE); Wiedemann, Gunter, D-40629 Düsseldorf (DE)
(74) Vertreter: Stenger, Watzke & Ring Patentanwälte

(56) Entgegenhaltungen:
- EP-A- 0 087 822
- EP-A- 0 277 535
- WO-A-93/02268
- FR-A- 1 571 987
- GB-A- 2 239 213
- NL-A- 6 815 984
- US-A- 2 936 050

## Beschreibung

Die Erfindung betrifft eine Brandschutzverglasung zur Vermeidung des Durchtritts von Feuer und Rauch im Brandfall aus einem Raum in einen anderen unter Verwendung mindestens einer mehrlagig aufgebauten Brandschutzscheibe, welche durch Hitzeeinwirkung aktivierbare Schutzschichten aufweist, sowie mit einer die Brandschutzscheibe haltenden Befestigung.

Brandschutzverglasungen sind lichtdurchlässige Bauelemente, die dazu bestimmt sind, entsprechend ihrer Feuerwiderstandsdauer die Ausbreitung von Feuer und Rauch sowie ferner einen unzulässigen Übergang von Wärme zu verhindern. In DIN 4102, Teil 13, sind Brandschutzverglasungen der Feuerwiderstandsklasse F sowie der Feuerwiderstandsklasse G beschrieben und hinsichtlich ihrer Anforderungen erläutert.

Zur Befestigung der Brandschutzscheiben verwenden herkömmliche Brandschutzverglasungen eine aus Profilen zusammengesetzte Haltekonstruktion, die hinsichtlich ihrer Größe und ihrer brandschutztechnischen Eigenschaften auf die verwendeten Glasscheiben abgestimmt ist. Die in der Praxis verwendeten Brandschutzverglasungen verfügen über Haltekonstruktionen aus Stahlprofilen, welche die einzelnen Brandschutzscheiben miteinander verbinden. Um im Brandfall eine Beschädigung der Stahlhohlprofile sowie ein Durchschlagen der Flammen im Bereich der Stoßflächen zu vermeiden, sind die Stahlhohlprofile beidseitig durch Streifen aus nichtbrennbarem bzw. schwer entflammbarem Material abgedeckt und geschützt. Neben dem hohen Erstellungsaufwand hat diese bekannte Brandschutzverglasung den Nachteil, daß die Streifen aus nichtbrennbarem bzw. schwer entflammbarem Material optisch wenig ansprechend aussehen, zumal sie im Vergleich zur Gesamtfläche der Brandschutzscheibe relativ breit ausfallen. Andererseits würde ein Verzicht auf die Streifen aus nichtbrennbarem bzw. schwer entflammbarem Material dazu führen, daß zwischen beiden Seiten der Brandschutzverglasung Wärmebrücken entstehen würden, so daß sich die Hitze sehr schnell durch die Brandschutzverglasung hindurch ausbreiten könnte.

Der Erfindung liegt die **Aufgabe** zugrunde, eine Brandschutzverglasung zur Vermeidung des Durchtritts von Feuer und Rauch im Brandfall aus einem Raum in einen anderen zu schaffen, mit der sich die Anzahl und Fläche der Wärmebrücken zwischen beiden Seiten der Verglasung verringern läßt.

Zur **Lösung** dieser Aufgabe wird vorgeschlagen, daß die Brandschutzscheibe mit einer Durchgangsöffnung versehen ist, welche von einem Stützteil der Befestigung durchsetzt ist, wobei die Durchgangsöffnung geringfügig größer als das darin angeordnete Stützteil ist und der auf diese Weise gebildete Zwischenraum vollständig mit einer zur Druckübertragung geeigneten Masse verfüllt ist.

Eine solche Brandschutzverglasung ist geeignet, gegenüber herkömmlichen Brandschutzverglasungen mit allseits umlaufenden Stahlhohlprofilen die Wärmebrücken zwischen beiden Seiten der Verglasung deutlich zu verringern. Die Brandschutzverglasung läßt sich außerdem besonders formschön gestalten, da Rahmenteile nahezu vollständig entfallen, und gleichwohl eine ausreichende Befestigung der jeweiligen Brandschutzscheiben innerhalb der Brandschutzverglasung gewährleistet ist. Zudem ist eine besonders einfache Montage der Brandschutzverglasung möglich.

Gemäß einer bevorzugten Ausgestaltung ist das Stützteil beidseitig mit Flachstücken verbunden, deren Innenflächen sich auf den Flachseiten der Brandschutzscheibe abstützen, vorzugsweise unter Zwischenlage einer feuerfesten Dichtungsschicht. Die Flachstücke tragen zusätzlich dazu bei, eine besonders gute Verbindung zwischen dem Stützteil und der umgebenden Durchgangsöffnung innerhalb der Brandschutzscheibe sicherzustellen, da ein etwaiges Verschwenken des Stützteiles innerhalb der Duchgangsöffnung vollständig unterbunden wird.

Vorzugsweise besteht jede Befestigung aus mindestens drei Durchgangsöffnungen mit jeweils einem Stützteil, wobei die mindestens drei Stützteile beidseitig mit allen Stützteilen gemeinsamen Flachstücken verbunden sind. Auf diese Weise läßt sich eine weitgehend starre Befestigung der Brandschutzscheibe realisieren, ohne daß die einzelnen Glasschichten zu stark druckbelastet sind und Schaden nehmen können. Die erfindungsgemäße Befestigungstechnik läßt sich daher auch bei Brandschutzscheiben anwenden, die nicht aus Einscheiben-Sicherheitsglas, sondern aus einfachem Floatglas aufgebaut sind.

Durch die Verwendung mindestens dreier Durchgangsöffnungen mit darin angeordneten Stützteilen sowie allen Stützteilen gemeinsamen Flachstücken wird ferner erreicht, daß keinerlei Biegemomente zwischen dem Stützteil und der umgebenden Durchgangsöffnung auftreten. Auch dieser Umstand ermöglicht die Verwendung des einfachen Floatglases für die Verglasung.

Um eine besonders gleichmäßige Übertragung der Haltekraft zwischen Befestigung und Brandschutzscheibe zu erreichen, sind Durchgangsöffnung und Stützteil vorzugsweise zylindrisch ausgebildet.

Mit der Erfindung wird schließlich vorgeschlagen, die der Druckübertragung zwischen Stützteil und umgebender Durchgangsöffnung dienende Masse auf Kunstharzbasis herzustellen. Dieses Material hat sich hinsichtlich des Druckübertragungsverhaltens als besonders geeignet herausgestellt.

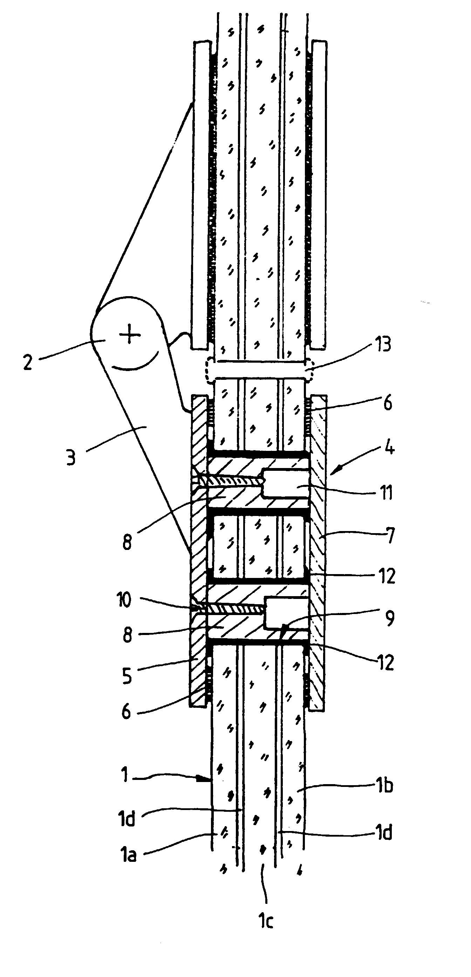

Weitere Einzelheiten und Vorteile des Gegenstandes der Erfindung werden nachfolgend anhand der Zeichnung erläutert. Diese zeigt einen Schnitt durch eine Brandschutzverglasung im Bereich der Stoßkanten zweier aneinandergrenzender Brandschutzscheiben.

Die auf der Zeichnung dargestellte Brandschutzverglasung dient der lichtdurchlässigen Unterteilung zweier aneinandergrenzender Räume und besteht aus Brandschutzscheiben 1, die beim Ausführungsbeispiel über ein Scharnier 2 miteinander verbunden sind. Bei den Brandschutzscheiben 1 handelt es sich um ein Spezialverbundglas, welches aus mehreren Glasscheiben mit dazwischen angeordneten Brandschutzschichten besteht. Im Brandfall werden diese Brandschutzschichten aktiviert, wobei sie Wärmestrahlung absorbieren und so eine wirksame Dämmschicht bilden, welche den Durchgang von Feuer und Rauch verhindert. Es kann vorgesehen sein, daß die Brandschutzschichten im Brandfall aufschäumen und dabei eine Trübung annehmen, so daß eine praktisch undurchsichtige Feuerschutzwand entsteht.

Beim Ausführungsbeispiel ist die Brandschutzscheibe 1 dreilagig aufgebaut, wobei sie aus zwei äußeren Scheiben 1a und 1b sowie einer dazwischen angeordneten Scheibe 1c besteht. Jeweils zwischen den Scheiben 1a und 1c bzw. 1b und 1c befindet sich die Brandschutzschicht 1d. Für das Brandschutzverhalten der Brandschutzscheibe 1 von besonderer Bedeutung ist die mittlere Scheibe 1c. Diese besteht bei hochwertigen Brandschutzverglasungen aus Einscheiben-Sicherheitsglas, im Rahmen der Erfindung kann jedoch auch ohne weiteres das einfache Floatglas zur Anwendung gelangen.

Beim Ausführungsbeispiel ist die in der Zeichnung oben dargestellte Brandschutzscheibe 1 als feststehende Scheibe ausgebildet, an der die weitere Brandschutzscheibe 1 mittels des Scharniers 2 schwenkbar befestigt ist. Die in der Zeichnung unten dargestellte Brandschutzscheibe 1 bildet daher den Flügel einer ein- oder zweiflügeligen Glastür.

Zur Befestigung an dem Scharnier 2 ist der Scharnierflügel 3 der Glastür 4 mit einem metallischen Flachstück 5 verschweißt, welches auf der Flachseite der Brandschutzscheibe unter Zwischenlage einer Dichtungsschicht 6 anliegt. Auch an der gegenüberliegenden Flachseite der Brandschutzscheibe 1 liegt ein Flachstück 7 über entsprechende Dichtungsschichten 6 an. Das Flachstück 7 ist starr mit Stützteilen 8 in Gestalt von Zylindern oder zylindrischen Hülsen versehen, welche jeweils eine kreisrunde Durchgangsöffnung 9 der Brandschutzscheibe 1 durchragen. Am Ende der Stützteile 8 liegen diese mit ihren Stirnflächen an der Innenseite des Flachstückes 5 an und sind mit diesem mittels Verschraubungen 10 verbunden.

Zwischen den beiden Flachstücken 5,7 erstrecken sich vorzugsweise jeweils drei zylindrische Stützteile 8, von denen in der Zeichnung zwei Stützteile 8 dargestellt sind.

Es ist anzustreben, zumindest einen Teil der zylindrischen Stützteile 8 nach Art von Hülsen auszubilden, um so die Querschnittsfläche der Stützteile 8 und damit die Größe der Wärmebrücken zwischen den beiden Seiten der Brandschutzscheibe 1 gering zu halten. Beim Ausführungsbeispiel laufen die zylindrischen Stützteile 8 zu diesem Zweck in Form von Hülsen mit freiem Innenraum 11 aus.

Die beim Ausführungsbeispiel kreisrunden Durchgangsöffnungen 9 sind geringfügig größer als das darin angeordnete Stützteil 8, so daß sich ein im Querschnitt ringförmiger Zwischenraum ergibt, der vollständig mit einer Masse 12 verfüllt ist. Als Masse 12 kommt ein solches Material in Betracht, welches, ohne starr zu sein, ein gutes Druckübertragungsverhalten aufweist. Besonders vorteilhaft sind bestimmte Harzverbindungen, aber auch Silikon, sofern dieses nicht zu weich ist.

Zur Herstellung der beschriebenen Befestigung wird zunächst die Brandschutzscheibe 1 in ihrem Randbereich mit den erforderlichen Durchgangsöffnungen 9 versehen. In diese Durchgangsöffnungen 9 werden dann anschließend die bereits mit dem Flachstück 7 verbundenen Stützteile 8 eingesetzt, bis sie die Durchgangsöffnung 9 vollständig durchsetzen. Selbstverständlich ist es auch möglich, zunächst die Stützteile 8 einzusetzen, und diese erst anschließend mit dem Flachstück 7 zu verbinden. Anschließend werden die Stützteile 8 innerhalb der Durchgangsöffnungen 9 zentriert, so daß sich der zum Einfüllen der Masse erforderliche, ringförmige Zwischenraum ergibt. Die Masse 12 wird in noch flüssigem Zustand eingefüllt, wobei sie sich innerhalb des ringförmigen Zwischenraumes verteilt und auf diese Weise eine Art Hülse um die Stützteile 8 herum bildet. Der Masse 12 ist dann anschließend Gelegenheit zu geben, auszuhärten. Nachdem der Aushärteprozeß abgeschlossen ist, wirkt jede Masse 12 wie eine Druckübertragungshülse zwischen dem Stützteil 8 und der umgebenden Durchgangsöffnung 9 der Brandschutzscheibe 1. Diese Druckübertragung erfolgt stets mit einer gewissen Restelastizität, so daß Beschädigungen der empfindlichen Glasschichten der Brandschutzscheibe 1 durch die Stützteile 8 ausgeschlossen sind.

Abschließend wird das Flachstück 5 auf die aus den Durchgangsöffnungen 9 herausragenden Stützteile 8 aufgesetzt und mit diesen verschraubt. Die zuvor oder anschließend eingefügten Dichtungsschichten 6 sorgen dafür, daß keine Feuchtigkeit an die eingeschlossene Masse 12 gelangen kann.

### Bezugszeichenliste

- 1: Brandschutzscheibe
- 1a: einzelne Scheibe
- 1b: einzelne Scheibe
- 1c: einzelne Scheibe
- 1d: Brandschutzschicht
- 2: Scharnier
- 3: Scharnierflügel
- 4: Glastür
- 5: Flachstück
- 6: Dichtungsschicht
- 7: Flachstück
- 8: Stützteil
- 9: Durchgangsöffnung
- 10: Verschraubung
- 11: freier Innenraum
- 12: Masse
- 13: Dichtung

## Patentansprüche

1. Brandschutzverglasung zur Vermeidung des Durchtritts von Feuer und Rauch im Brandfall aus einem Raum in einen anderen unter Verwendung mindestens einer mehrlagig aufgebauten Brandschutzscheibe, welche durch Hitzeeinwirkung aktivierbare Schutzschichten aufweist, sowie mit einer die Brandschutzscheibe haltenden und stützenden Befestigung,
**dadurch gekennzeichnet**,
daß die Brandschutzscheibe (1) mit einer Durchgangsöffnung (9) versehen ist, welche von einem Stützteil (8) der Befestigung durchsetzt ist, wobei die Durchgangsöffnung (9) geringfügig größer als das darin angeordnete Stützteil (8) ist und der auf diese Weise gebildete Zwischenraum vollständig mit einer zur Druckübertragung geeigneten Masse (12) verfüllt ist.

2. Brandschutzverglasung nach Anspruch 1, dadurch gekennzeichnet, daß das Stützteil (8) beidseitig mit Flachstücken (5,7) verbunden ist, deren Innenflächen sich auf den Flachseiten der Brandschutzscheibe (1) abstützen, vorzugsweise unter Zwischenlage einer feuerfesten Dichtungsschicht (6).

3. Brandschutzverglasung nach Anspruch 2, dadurch gekennzeichnet, daß jede Befestigung aus mindestens drei Durchgangsöffnungen (9) mit jeweils einem Stützteil (8) besteht, wobei die mindestens drei Stützteile (8) beidseitig mit allen Stützteilen (8) gemeinsamen Flachstücken (5,7) verbunden sind.

4. Brandschutzverglasung nach Anspruch 2 oder Anspruch 3, dadurch gekennzeichnet, daß die Länge des Stützteiles (8) die Dicke der Brandschutzscheibe (1) übersteigt.

5. Brandschutzverglasung nach einem der Ansprüche 1 bis 4, dadurch gekennzeichnet, daß Durchgangsöffnung (9) und Stützteil (8) zylindrisch ausgebildet sind.

6. Brandschutzverglasung nach einem der Ansprüche 1 bis 5, gekennzeichnet durch eine Masse (12) auf Kunstharzbasis.

## Claims

1. Fire resistant glazing to avoid flames and smoke passing from one room into another in the event of a fire, using at least one pane of fire resistant glass which is made up of many layers and has protective layers which can be activated by the effect of heat, and having a fastening which holds and supports the pane of fire resistant glass, characterized in that the pane (1) of fire resistant glass is provided with a passage opening (9) through which a supporting part (8) of the fastening passes, the passage opening (9) being slightly larger than the supporting part (8) arranged therein, and the gap formed in this way being completely filled with a substance (12) suitable for transmitting pressure.

2. Fire resistant glazing according to Claim 1, characterized in that the supporting part (8) is connected on both sides to flat pieces (5, 7), the inner surfaces of which are supported on the flat sides of the pane (1) of fire resistant glass, preferably with interposition of a fireproof sealing layer (6).

3. Fire resistant glazing according to Claim 2, characterized in that each fastening comprises at least three passage openings (9), each having a supporting part (8), the at least three supporting parts (8) being connected on both sides to flat pieces (5, 7) common to all supporting parts (8).

4. Fire resistant glazing according to Claim 2 or Claim 3, characterized in that the length of the supporting part (8) exceeds the thickness of the pane (1) of fire resistant glass.

5. Fire resistant glazing according to one of Claims 1 to 4, characterized in that the passage opening (9) and the supporting part (8) are of cylindrical design.

6. Fire resistant glazing according to one of Claims 1 to 5, characterized by a substance (12) based on synthetic resin.

## Revendications

1. Vitrage pare-feu destiné à empêcher, dans le cas d'un incendie, que le feu et la fumée ne se propagent d'une pièce à une autre, en utilisant au moins une vitre pare-feu constituée de plusieurs couches, laquelle sous l'effet de la chaleur présente des couches d'isolation activables, ainsi que la fixation destinée à soutenir la vitre pare-feu,
caractérisé en ce que
la vitre pare-feu (1) est dotée d'une ouverture de passage (9), laquelle est occupée par un élément d'appui (8) de la fixation, l'ouverture de passage (9) étant à peine plus large que l'élément d'appui (8) logé à l'intérieur, et l'espace intermédiaire généré de ce fait étant totalement comblé par une matière de charge appropriée (12) pour le transfert de pression.

2. Vitrage pare-feu selon la Revendication 1,
caractérisé en ce que l'élément d'appui (8) est relié des deux côtés avec des éléments plats (5, 7), dont les surfaces intérieures s'appuient sur les côtés plats de la vitre pare-feu (1), de préférence sous la position intermédiaire d'une couche d'étanchéification résistante au feu (6).

3. Vitrage pare-feu selon la Revendication 2,
caractérisé en ce que chaque fixation se compose d'au moins trois ouvertures de passage (9) présentant chacune un élément d'appui (8), les trois éléments d'appui minimum (8) étant reliés des deux côtés avec les éléments plats (5, 7) communs à tous les éléments d'appui (8).

4. Vitrage pare-feu selon la Revendication 2 ou la Revendication 3, caractérisé en ce que la longueur de l'élément d'appui (8) est supérieure à l'épaisseur de la vitre pare-feu (1).

5. Vitrage pare-feu selon l'une des Revendications 1 à 4, caractérisé en ce que l'ouverture de passage (9) et l'élément d'appui (8) sont de forme cylindrique.

6. Vitrage pare-feu selon l'une des Revendications 1 à 5, caractérisé en ce que la matière de charge (12) est une base de résine synthétique.
